# EUROPEAN PATENT SPECIFICATION

(11) **EP 3 706 326 B1**
(45) Date of publication and mention of the grant of the patent: **21.02.2024**
(21) Application number: 19160884.3
(22) Date of filing: 05.03.2019
(51) Int. Cl.: H04B 1/74, H04B 7/06, H04B 1/04

(54) **COMMUNICATION DEVICE FOR COMMUNICATING BETWEEN A POWER EQUIPMENT CONTROLLER AND POWER EQUIPMENT DEVICES**
KOMMUNIKATIONSVORRICHTUNG ZUR KOMMUNIKATION ZWISCHEN EINEM LEISTUNGSAUSRÜSTUNGSSTEUERGERÄT UND LEISTUNGSAUSRÜSTUNGSVORRICHTUNGEN
DISPOSITIF DE COMMUNICATION PERMETTANT DE COMMUNIQUER ENTRE UN CONTRÔLEUR D'ÉQUIPEMENT ÉLECTRIQUE ET DES DISPOSITIFS D'ÉQUIPEMENT ÉLECTRIQUE

(43) Date of publication of application: 09.09.2020
(73) Proprietor: Hitachi Energy Ltd, 8050 Zürich (CH)
(72) Inventor: ZHIBO, Pang, 722 40 Västerås (SE); DAVIDSSON, Mikael, 723 48 Västerås (SE); LUVISOTTO, Michele, 722 19 Västerås (SE); CHEN, Nan, 722 10 Västerås (SE)
(74) Representative: AWA Sweden AB

(56) References cited:
- US-A1- 2004 121 810
- US-A1- 2014 112 409
- US-A1- 2017 244 457

## Description

### TECHNICAL FIELD

The present disclosure relates to the field of radio frequency (RF) communication and in particular to a communication device comprising an RF splitter and a plurality of antennas.

### BACKGROUND

An example of prior art may be found in US2014/0112409 relating to a wireless communication system and a transformer equipment control system.
In traditional high-voltage power electronics systems such as switchgear, HVDC (High Voltage Direct Current), and/or FACTS (Flexible Alternating Current Transmission Systems), etc., the switching of power electronics modules is controlled through wired links, for example optical fibres. Due to the complexity of such systems and the high number of power electronics modules involved, several thousands of cables are often deployed, with a strong impact in structural design, installation and commissioning costs. Moreover, optical fibres being subject to high difference potentials, as it is the case in high-voltage systems, increases risk of flammability. Also, optical transmitters have a much shorter life cycle than power electronics components, with failure rates that can be up to 20 times higher.

One way to reduce these problems would be to migrate from wired to wireless communication of control signals. However, the environment of a high-voltage power electronics system is very difficult for wireless communication. There are enclosures creating reflections and affecting attenuation. The presence of metal objects causes further signal propagation issues and the switching and high voltage electronic components can cause interference. Field tests have confirmed that the radio propagation environment inside valve halls is much worse than outside.

Additionally, the communication of control signals in this application is of utmost importance and any failed communication may cause great disruption of the supply of power to large parts of a power grid.

### SUMMARY

One objective is to provide wireless communication suitable for use in a high-voltage power electronics system which is more reliable than what is known in the prior art. The present invention is defined as set out in the appended claims.

According to a first aspect, it is provided a high-voltage power electronics system as defined in independent claim 1.

The system may comprise at least two of the RF modules and an RF merger module, in which case the RF merger module is configured to merge RF transmission signals from the at least two RF modules in a combined RF signal, and to provide the combined RF signal to the RF splitter.

Each one of the at least two RF modules may receive the same data to transmit, in which case the RF transmission signals differ between different RF modules.

Different RF modules may use different communication channels for their RF transmission signals.

The different communication channels may differ in at least one of frequency, time slots, and encoding.

The at least two RF modules may be simultaneously active.

The enclosure may be a valve hall.

According to a second aspect, it is provided a method, as defined in independent claim 8, for communicating between a power equipment controller and power equipment devices of a high-voltage power electronics system.

The method may further comprise the step of: merging RF transmission signals from at least two RF modules in a combined RF signal; and providing the combined RF signal to the RF splitter.

The step of processing RF transmission signals may comprise receiving the same data to transmit in at least two RF modules, in which case the RF transmission signals differ between different RF modules.

The step of processing RF transmission different RF modules may use different communication channels for their RF transmission signals.

The different communication channels may differ in at least one of frequency, time slots, and encoding.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 shows a schematic drawing illustrating an environment in which embodiments presented herein can be applied;
Fig 2 shows a schematic drawing illustrating one embodiment comprising a plurality of RF modules and a merger; and
Fig 3 is a flow chart illustrating a method for communicating in a high-voltage power electronics system.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

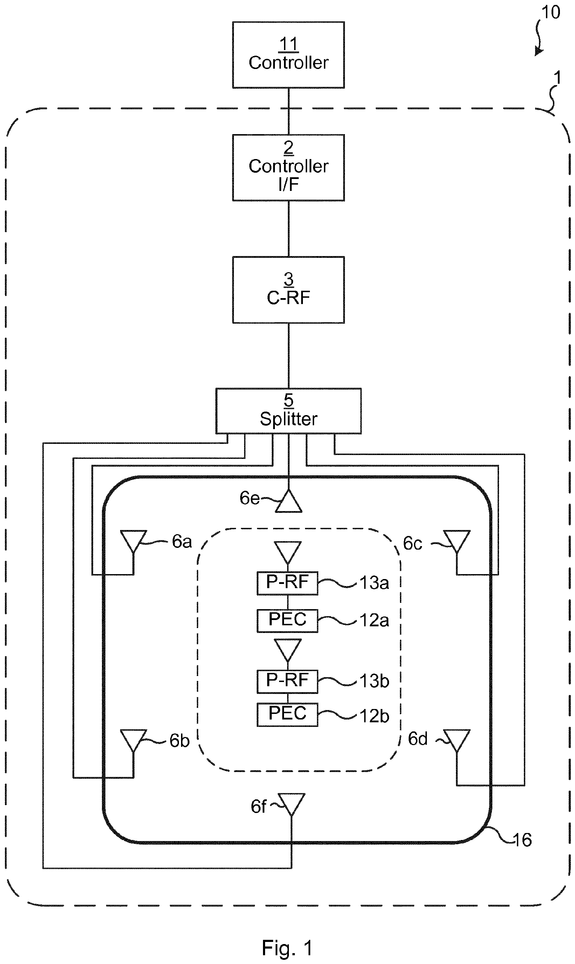

Fig 1 shows a schematic drawing illustrating an environment being a high-voltage power electronics system 10 in which embodiments presented herein can be applied. The high-voltage power electronics system can e.g. be in the form of switchgear, HVDC, and/or FACTS, etc.

A power equipment controller 11 needs to communicate with one or more power equipment devices 12a-b. The power equipment devices 12a-b can e.g. be switches, local controllers, measurement equipment, etc. or any combination or multiple instances of these. Each one of the power equipment devices 12a-b communicate using a respective power equipment communication module 13a-b and a corresponding antenna. The power equipment devices 12a-b are provided inside an enclosure 16. The enclosure 16 can comprise walls, roof and floor and can thus be provided in the form of a building, such as a valve hall.

A communication device 1 is provided for communicating between the power equipment controller 11 and the power equipment devices 12a-b. The communication device 1 is comprises components indicated in Fig 1 between the two dashed lines, except the enclosure 16, which does not form part of the communication device 1.

The communication device 1 comprises a controller interface 2 for communicating with the power equipment controller 11. The controller interface 2 can e.g. be an optical interface, a conductive interface or a wireless interface. The controller interface can e.g. based on any suitable Ethernet or IEEE 802.11.x standard, upon which e.g. Internet Protocol (IP) can be used. Alternatively or additionally, custom protocols can be used for low overhead, high performance, communication.

An RF (radio frequency) module 3 is provided. The RF module 3 comprises circuitry for processing RF transmission signals (based on signals provided from the power equipment controller 11) and received RF signals (resulting in signals being provided to the power equipment controller 11).

An RF splitter 5 is connected to the RF module 3. The RF splitter 5 is configured to split RF transmission signals to several corresponding RF antenna signals. The RF antenna signals all contain the same RF signals.

A plurality of antennas 6a-f are configured to transmit a respective one of the RF antenna signals (from the RF splitter) to at least one power equipment device 12a-b. The antennas are provided inside the enclosure 16, while the RF module 3 is provided outside the enclosure. In the quite difficult RF environment of the high-voltage power electronics system 10, the use of multiple redundant antennas allows the power equipment devices 12a-b to receive the RF signal from any one of the antennas 6a-f. In this way, reliability of communication is greatly improved. Moreover, the length in time of transmission symbols is long compared with the time it takes for the RF signals to travel between the antennas 6a-f and the power equipment devices 12a-b. In this way, signal to noise ratio is improved further by the power equipment communication modules 13a-b effectively aggregating all signals received. Moreover, since the same RF signals are provided to all of the antennas 6a-f, great redundancy in RF transmissions to the power equipment device 12a-b is provided. If one of the antennas 6a-f were to fail, communication can proceed without any interruption since all antennas transmit the same RF signals. In other words, a single failed antenna probably does not need to be replaced immediately and can be replaced at the next time there is maintenance in the valve hall. This is of great advantage, since any work inside the valve hall is disruptive. Furthermore, the rate of failure of antennas, splitter and merger is low.

The redundant antennas 6a-f also make transmissions from the power equipment devices 12a-b more reliable, since it is sufficient that such a transmission is successfully received by one of the redundant antennas 6a-f.

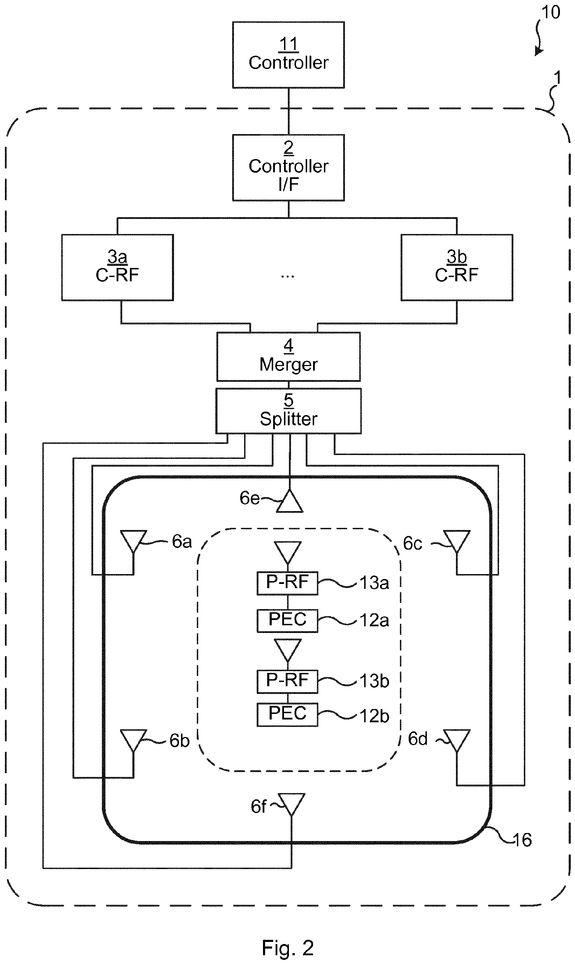

Fig 2 shows a schematic drawing illustrating one embodiment comprising a plurality of RF modules and a merger. Only differences compared to the embodiment of Fig 1 are described here. Compared to the embodiment of Fig 1, there are here two RF modules 3a-b. It is to be noted that there can be any number of RF modules in this embodiment.

Each one of the RF modules 3a-b receives the same data (from the power equipment controller 11) to transmit. In one embodiment, the RF modules 3a-b are simultaneously active. In such a case, the RF transmission signals differ between different RF modules 3a-b, e.g. by using different communication channels for their RF transmission signals. The different communication channels can differ in at least one of frequency, time slots, and encoding. This results in fully redundant transmission of the same data from the power equipment controller 11 using the different RF modules 3a-b.

An RF merger module 4 is configured to merge RF transmission signals from the RF modules 3a-b in a combined RF signal, and to provide the combined RF signal to the RF splitter 5. The merging occurs by multiplexing the transmission signals from the RF modules 3a-b in a single combined RF signal, which works when the differ in at least one of frequency (thus merging using FDMA, Frequency Division Multiple Access), time slots (thus merging using TDMA, Time Division Multiple Access) and encoding (thus merging using CDMA, Code Division Multiple Access).

In other words, all of the antennas 6a-f transmit the same RF signals (as in the embodiment shown in Fig 1). Furthermore, the antennas 6a-f are shared by all of the RF modules 3a-b. None of the antennas 6a-f are thus tied to any one (or a subset) of the RF modules 3a-b.

Hence, the RF merger module 4, the RF splitter 5 and the antennas 6a-f are shared by all of the RF modules 3a-.

Since the same data (provided by the power equipment controller 11) forms part of different RF transmission signals, reliability is improved. It is sufficient that the power equipment communication module 13a-b receives only one of these RF transmission signals to receive the data. Successful receipt can be determined e.g. using Cyclic Redundancy Check (CRC). Using multiple channels sending the same data essentially provides a spatial redundancy, since the propagation (fading) most likely differ for different channels and different paths between antenna and power equipment communication module. Moreover, if one of the RF modules 3a-b were to fail, the other RF module(s) continue to transmit the same data, reducing any issues of the failed RF module.

In one embodiment, one of the RF module(s) 3a-3b is in active mode. The other RF module(s) are then in hot stand-by mode and are ready to step in if the active RF module were to fail.

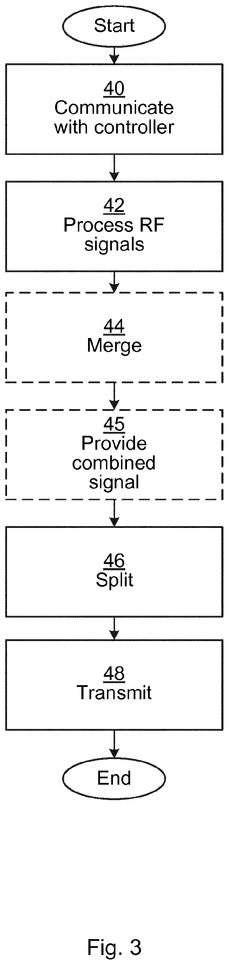

Fig 3 is a flow chart illustrating a method for communicating in a high-voltage power electronics system. The method is performed in the communication device.

In a *communicate with controller* step 40, the communication device communicates with the power equipment controller using a controller interface (2 of Fig 1 and Fig 2). In particular this step comprises receiving data from the power equipment controller for transmission to power equipment and/or providing data received from the power equipment to the power equipment controller.

In a *process RF signals* step 42, the communication device processes RF transmission signals and received RF signals in circuitry of at least one RF module. In other words, the communication device converts between RF signals and data to/from the power equipment controller. Optionally, the same data is received from the power equipment controller to be transmitted in at least two RF modules. In this case, the RF transmission signals differ between different RF modules, even though the data content is the same. For instance, different RF modules can use different communication channels for their RF transmission signals. The different communication channels differ in at least one of frequency, time slots, and encoding.

In an optional *merge* step 44, the communication device merges RF transmission signals from at least two RF modules to a combined RF signal. This step is performed in the RF merger module.

In an optional *provide combined signal* step 45, the communication device provides the combined RF signal to the RF splitter.

In a *split* step 46, the communication device splits RF transmission signals received from the at least one RF module (optionally via the merge step 44) to several corresponding RF antenna signals. This step is performed in the RF splitter which is connected to the at least one RF module. The several corresponding RF antenna signals contain the same RF signals, thus providing transmission redundancy.

In a *transmit* step 48, the communication device transmits each one of the RF antenna signals to at least one power equipment device using the plurality of antennas.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A high-voltage power electronics system (10) in the form of a switchgear, a high voltage direct current, HVDC, system and/or a Flexible Alternating Current Transmission System, FACTS, said system comprising:
one or more power equipment devices (12a-b);
a power equipment controller (11);
an enclosure (16) housing the one or more power equipment devices (12a-b);
at least one RF, radio frequency, module (3, 3a-b) provided outside the enclosure (16) and comprising circuitry for processing RF transmission signals based on signals provided from the power equipment controller (11), and for processing received RF signals transmitted from at least one of the one or more power equipment devices (12a-b) to provide signals to the power equipment controller;
an RF splitter (5) connected to the at least one RF module (3, 3a-b), the RF splitter (5) being configured to split RF transmission signals received from the at least one RF module (3, 3a-b) to several corresponding RF antenna signals all containing the same RF signals, and
a plurality of antennas (6a-f) provided inside the enclosure (16) and configured to transmit each one of the RF antenna signals to at least one of the one or more power equipment devices (12a-b).

2. The system (10) according to claim 1, comprising at least two of the RF modules (3, 3a-b) and an RF merger module (4), wherein the RF merger module is configured to merge RF transmission signals from the at least two RF modules (3, 3a-b) in a combined RF signal, and to provide the combined RF signal to the RF splitter (5).

3. The system (10) according to claim 2, wherein each one of the at least two RF modules (3, 3a-b) is configured to receive the same data to transmit, and wherein the RF transmission signals differ between different RF modules (3, 3a-b).

4. The system (10) according to claim 3, wherein different RF modules (3, 3a-b) are configured to use different communication channels for their RF transmission signals.

5. The system (10) according to claim 4, wherein the different communication channels differ in at least one of frequency, time slots, and encoding.

6. The system (10) according to any one of claims 2 to 5, wherein the at least two RF modules are simultaneously active.

7. The system (10) according to any one of the preceding claims, wherein the enclosure (16) is a valve hall.

8. A method for communicating between a power equipment controller (11) and one or more power equipment devices (12a-b) of a high-voltage power electronics system (10) in the form of a switchgear, a high voltage direct current, HVDC, system and/or a Flexible Alternating Current Transmission System, FACTS, the one or more power equipment devices (12a-b) being housed within an enclosure (16) of the system (10), the method comprising:
processing (42) radio frequency, RF, transmission signals based on signals provided from the power equipment controller (11), and processing received RF signals transmitted from at least one of the one or more power equipment devices (12a-b) to provide signals to the power equipment controller (11), in circuitry of at least one RF module (3, 3a-b) provided outside the enclosure (16);
splitting (46) RF transmission signals received from the at least one RF module (3, 3a-b) to several corresponding RF antenna signals each containing the same RF signals in an RF splitter (5) connected to the at least one RF module (3, 3a-b); and
transmitting (48) each one of the RF antenna signals to at least one of the one or more power equipment devices (12a-b) using a plurality of antennas (6a-f) provided inside the enclosure (16).

9. The method according to claim 8, further comprising the step of:
merging (44) RF transmission signals from at least two RF modules (3, 3a-b) in a combined RF signal; and
providing (45) the combined RF signal to the RF splitter (5).

10. The method according to claim 9, wherein the step of processing (42) RF transmission signals comprises receiving the same data to transmit in at least two RF modules (3, 3a-b), and wherein the RF transmission signals differ between different RF modules (3, 3a-b).

11. The method according to claim 10, wherein the step of processing (42) RF transmission different RF modules (3, 3a-b) use different communication channels for their RF transmission signals.

12. The method according to claim 11, wherein the different communication channels differ in at least one of frequency, time slots, and encoding.

## Patentansprüche

1. Hochspannungs-Leistungselektroniksystem (10) in Form einer Schaltanlage, eines Hochspannungs-Gleichstrom-HVDC-Systems und/oder eines flexiblen Wechselstrom-Übertragungssystems, FACTS, wobei das System umfasst:
eine oder mehrere Leistungsausrüstungsvorrichtungen (12a-b) ;
eine Leistungsausrüstungssteuerung (11);
ein Gehäuse (16), in dem die eine oder mehrere Leistungsausrüstungsvorrichtungen (12a-b) untergebracht sind;
mindestens ein HF, Hochfrequenz, Modul (3, 3a-b), das außerhalb des Gehäuses (16) bereitgestellt ist, und einer Schaltung zum Verarbeiten von HF-Übertragungssignalen basierend auf Signalen umfasst, die von der Leistungsausrüstungssteuerung (11) bereitgestellt sind, und zum Verarbeiten empfangener HF-Signale, die von mindestens einer der einen oder mehreren Leistungsausrüstungsvorrichtungen (12a-b) übertragen werden, um Signale an die Leistungsausrüstungssteuerung bereitzustellen;
einen HF-Splitter (5), der mit dem mindestens einen HF-Modul (3, 3a-b) verbunden ist, wobei der HF-Splitter (5) dazu ausgelegt ist, von dem mindestens einen HF-Modul (3, 3a-b) empfangene HF-Übertragungssignale in mehrere entsprechende HF-Antennensignale zu teilen, die alle die gleichen HF-Signale enthalten, und
eine Mehrzahl von Antennen (6a-f), die innerhalb des Gehäuses (16) bereitgestellt und dazu ausgelegt sind, jedes der HF-Antennensignale an mindestens eine der einen oder mehreren Leistungsausrüstungsvorrichtungen (12a-b) zu übertragen.

2. System (10) nach Anspruch 1, das mindestens zwei der HF-Module (3, 3a-b) und ein HF-Zusammenführungsmodul (4) umfasst, wobei das HF-Fusionsmodul dazu ausgelegt ist, um HF-Übertragungssignale von den mindestens zwei HF-Modulen (3, 3a-b) in einem kombinierten HF-Signal zusammenzuführen, und das kombinierte HF-Signal an den HF-Splitter (5) bereitzustellen.

3. System (10) nach Anspruch 2, wobei jedes der mindestens zwei HF-Module (3, 3a-b) dazu ausgelegt ist, die gleichen zu übertragenden Daten zu empfangen, und wobei sich die HF-Übertragungssignale zwischen verschiedenen HF-Modulen (3, 3a-b) unterscheiden.

4. System (10) nach Anspruch 3, wobei verschiedene HF-Module (3, 3a-b) dazu ausgelegt sind, unterschiedliche Kommunikationskanäle für ihre HF-Übertragungssignale verwenden.

5. System (10) nach Anspruch 4, wobei sich die verschiedenen Kommunikationskanäle in Frequenz und/oder Zeitschlitzen und/oder Codierung unterscheiden.

6. System (10) nach einem der Ansprüche 2 bis 5, wobei die mindestens zwei HF-Module gleichzeitig aktiv sind.

7. System (10) nach einem der vorhergehenden Ansprüche, wobei das Gehäuse (16) eine Stromrichterstation ist.

8. Verfahren zum Kommunizieren zwischen einer Leistungsausrüstungssteuerung (11) und eine oder mehrere Leistungsausrüstungsvorrichtungen (12a-b) eines Hochspannungs-Leistungselektroniksystems (10) in Form einer Schaltanlage, eines Hochspannungsgleichstromsystems, HVDDC-Systems, und/oder eines flexiblen Wechselstromübertragungssystems, FACTS, wobei das einen oder mehrere Leistungsausrüstungsvorrichtungen (12a-b) in einem Gehäuse (16) des Systems (10) untergebracht sind, wobei das Verfahren umfasst:
Verarbeiten (42) von Hochfrequenz-, HF-, Übertragungssignalen basierend auf Signalen, die von der Leistungsausrüstungssteuerung bereitgestellt werden (11) und Verarbeiten empfangener HF-Signale, die von mindestens einer der einen oder mehreren Leistungsausrüstungsvorrichtungen (12a-b) übertragen werden, um Signale an die Leistungsausrüstungssteuerung (11) in einer Schaltung von mindestens einem HF-Modul (3, 3a-b) bereitzustellen, das außerhalb des Gehäuses (16) bereitgestellt ist;
Aufteilen (46) von HF-Übertragungssignalen, die von dem mindestens einen HF-Modul (3, 3a-b) empfangen werden, auf mehrere entsprechende HF-Antennensignale, die jeweils die gleichen HF-Signale in einem HF-Splitter (5) enthalten, der mit dem mindestens einen HF-Modul (3, 3ab) verbunden ist; und
Übertragen (48) jedes der HF-Antennensignale an mindestens eine der einen oder mehreren Leistungsausrüstungsvorrichtungen (12a-b) unter Verwendung einer Mehrzahl von Antennen (6a-f), die innerhalb des Gehäuses (16) bereitgestellt sind.

9. Verfahren nach Anspruch 8, das ferner den folgenden Schritt umfasst:
Zusammenführen (44) von HF-Übertragungssignalen von mindestens zwei HF-Modulen (3, 3a-b) in ein kombiniertes HF-Signal; und
Bereitstellen (45) des kombinierten HF-Signals an den HF-Splitter (5).

10. Verfahren nach Anspruch 9, wobei der Schritt des Verarbeitens (42) von HF-Übertragungssignalen das Empfangen der gleichen Daten zum Übertragen in mindestens zwei HF-Modulen (3, 3a-b) umfasst, und wobei sich die HF-Übertragungssignale zwischen verschiedenen HF-Modulen (3, 3a-b) unterscheiden.

11. Verfahren nach Anspruch 10, wobei der Schritt des Verarbeitens (42) von HF-Übertragung verschiedener HF-Module (3, 3a-b) unterschiedliche Kommunikationskanäle für ihre HF-Übertragungssignale verwendet.

12. Verfahren (10) nach Anspruch 11, wobei sich die verschiedenen Kommunikationskanäle in Frequenz und/oder Zeitschlitzen und/oder Codierung unterscheiden.

## Revendications

1. Système (10) d'électronique de puissance haute tension sous la forme d'un appareil de commutation, d'un système à courant continu à haute tension, HVDC, et/ou d'un système de transmission flexible en courant alternatif, FACTS, ledit système comprenant :
un ou plusieurs dispositifs d'équipement de puissance (12a-b) ;
un contrôleur d'équipement de puissance (11) ;
une enceinte (16) abritant les un ou plusieurs dispositifs d'équipement de puissance (12a-b) ;
au moins un module RF, radiofréquence, (3, 3a-b) prévu en dehors de l'enceinte (16) et comprenant des circuits de traitement de signaux de transmission RF sur la base de signaux fournis par le contrôleur d'équipement de puissance (11), et de traitement de signaux RF reçus transmis par au moins un des un ou plusieurs dispositifs d'équipement de puissance (12a-b) pour fournir des signaux au contrôleur d'équipement de puissance ;
un répartiteur RF (5) connecté à l'au moins un module RF (3, 3a-b), le répartiteur RF (5) étant configuré pour diviser des signaux de transmission RF reçus en provenance de l'au moins un module RF (3, 3a-b) en plusieurs signaux d'antenne RF correspondants contenant tous les mêmes signaux RF, et
une pluralité d'antennes (6a-f) prévues à l'intérieur de l'enceinte (16) et configurées pour transmettre chacun des signaux d'antenne RF à au moins un des un ou plusieurs dispositifs d'équipement de puissance (12a-b).

2. Système (10) selon la revendication 1, comprenant au moins deux des modules RF (3, 3a-b) et un module de fusionnement RF (4), le module de fusionnement RF étant configuré pour fusionner des signaux de transmission RF provenant des au moins deux modules RF (3, 3a-b) dans un signal RF combiné, et pour fournir le signal RF combiné au répartiteur RF (5).

3. Système (10) selon la revendication 2, chacun des au moins deux des modules RF (3, 3a-b) étant configuré pour recevoir les mêmes données à transmettre, et, les signaux de transmission RF étant différents entre différents modules RF (3, 3a-b).

4. Système (10) selon la revendication 3, les différents modules RF (3, 3a-b) étant configurés pour utiliser différents canaux de communication pour leurs signaux de transmission RF.

5. Système (10) selon la revendication 4, les différents canaux de communication ayant une fréquence et/ou des créneaux temporels et/ou un encodage différent(e) (s).

6. Système (10) selon l'une quelconque des revendications 2 à 5, les au moins deux modules RF étant actifs simultanément.

7. Système (10) selon l'une quelconque des revendications précédentes, l'enceinte (16) étant une salle de valves.

8. Procédé de communication entre un contrôleur d'équipement de puissance (11) et un ou plusieurs dispositifs d'équipement de puissance (12a-b) d'un système (10) d'électronique de puissance haute tension sous la forme d'un appareil de commutation, d'un système à courant continu à haute tension, HVDC, et/ou d'un système de transmission flexible en courant alternatif, FACTS, les un ou plusieurs dispositifs d'équipement de puissance (12a-b) étant abrités à l'intérieur d'une enceinte (16) du système (10), le procédé comprenant :
le traitement (42) de signaux de transmission radiofréquence, RF, sur la base de signaux fournis par le contrôleur d'équipement de puissance (11), et le traitement de signaux RF reçus transmis par au moins un des un ou plusieurs dispositifs d'équipement de puissance (12a-b) pour fournir des signaux au contrôleur d'équipement de puissance (11), dans des circuits d'au moins un module RF (3, 3a-b) prévu en dehors de l'enceinte (16) ;
la division (46) de signaux de transmission RF reçus en provenance de l'au moins un module RF (3, 3a-b) en plusieurs signaux d'antenne RF correspondants contenant chacun les mêmes signaux RF dans un répartiteur RF (5) connecté à l'au moins un module RF (3, 3a-b) ; et
la transmission (48) de chacun des signaux d'antenne RF à au moins un des un ou plusieurs dispositifs d'équipement de puissance (12a-b) en utilisant une pluralité d'antennes (6a-f) prévues à l'intérieur de l'enceinte (16).

9. Procédé selon la revendication 8, comprenant en outre les étapes de :
fusionnement (44) de signaux de transmission RF provenant d'au moins deux modules RF (3, 3a-b) dans un signal RF combiné ; et
fourniture (45) du signal RF combiné au répartiteur RF (5) .

10. Procédé selon la revendication 9, l'étape de traitement (42) de signaux de transmission RF comprenant la réception des mêmes données à transmettre dans au moins deux modules RF (3, 3a-b), et, les signaux de transmission RF étant différents entre différents modules RF (3, 3a-b).

11. Procédé selon la revendication 10, l'étape de traitement (42) de différents modules RF (3, 3a-b) de transmission RF utilisant différents canaux de communication pour leurs signaux de transmission RF.

12. Procédé selon la revendication 11, les différents canaux de communication ayant une fréquence et/ou des créneaux temporels et/ou un encodage différent(e)(s).
